Europäisches Patentamt

European Patent Office

Office européen des brevets

(11) Publication number: **0 331 914**
A2

# (12) EUROPEAN PATENT APPLICATION

(21) Application number: 89102108.1

(22) Date of filing: 08.02.89

(51) Int. Cl.⁴: **B25J 17/02** , **B25J 15/02** , **B25J 9/12**

(30) Priority: 10.03.88 US 166277

(43) Date of publication of application:
13.09.89 Bulletin 89/37

(84) Designated Contracting States:
DE FR GB IT

(71) Applicant: International Business Machines
Corporation
Old Orchard Road
Armonk, N.Y. 10504(US)

(72) Inventor: Pawletko, Joseph Paul
3718 Maplehurst Drive
Endwell New York 13760(US)

(74) Representative: Mönig, Anton, Dipl.-Ing.
IBM Deutschland GmbH Schönaicher
Strasse 220
D-7030 Böblingen(DE)

(54) Four degree of freedom gripper.

(57) A robot "hand" having a wrist action providing motion in yaw, pitch and roll, comprising three motor assemblies connected mechanically in tandem, with the mechanical output of the first assembly connected to the second motor assembly and the mechanical output of the second assembly connected the third motor assembly, the mechanical connections affording rotation of the three assemblies in mutually orthogonal axes. Each of the motor assemblies comprises a stepping motor of the variable reluctance type having an even plurality of three-phase magnetic pole structures. A work piece or a gripping device is connected to the mechanical output of the third motor assembly.

FIG. 1

## FOUR DEGREE OF FREEDOM GRIPPER

The invention is directed to a gripper or robot "hand" or grasper, and particularly to a gripper providing a "wrist" action at the end of a robot arm, and with a gripping device at the distal end of the wrist action assembly.

There are numerous "wrist" action grippers known in the prior art, having common drive elements, and individual drive elements which are connected to output mechanisms for the different degrees of freedom via such means as belts, chains, gears, concentric axles, geared reduction motors, etc. Such drives suffer from the effects of lost motion, slippage and other mechanical deficiencies. Mechanisms using geared reduction motors are bulky and have undesirable amounts of backlash which makes accurate operation difficult to achieve.

Also, the known arrangements do not permit a uniform interchangeability among the component driving elements, nor do they provide driving elements adapted to accommodate job specific assignments. The elimination of gearing and other complicated force transmission means is accompanied by an increase of accuracy, less bulk, and overall simplification of structure.

One such known device is shown and described in US-A-4 527 945. The apparatus disclosed in the patent is a "wrist" action arrangement with three degrees of freedom. Permanent-magnet DC motors, each with a gear reduction train, are provided, one for each axis of operation (degree of freedom). Thus the system is prone to all of the difficulties attending the use of mechanical means for directing and modifying the output torques of the motors.

The invention as claimed is intended to remedy these drawbacks. It solves the problem of providing an improved gripper mechanism having four degrees of freedom.

The present invention provides a device of the type described which is economical of space, has increased reliability, greater accuracy, lower cost, and greater uniformity of parts than known arrangements of this type.

Another advantage of this invention is an improved gripper mechanism having four degrees of freedom, utilizing three multi-phase stepping motors in an extended array to provide three degrees of freedom and a brushless direct current motor to open and close the gripper jaws.

A further advantage of the invention is an improved gripper mechanism having stepping motors in three sequentially arranged assemblies which move a set of gripper jaws in yaw, pitch, and roll motions, respectively.

Still another advantage of the invention is an improved gripper mechanism which can be attached to the extremity of a robot arm to provide a "wrist" action, and which is devoid of bulky mechanical force transforming devices.

A further advantage of the invention is an improved gripper mechanism employing multi-phase stepping motors.

Three sequentially connected assemblies of stepping motors are arranged to provide independent rotation around yaw, pitch, and roll axes, respectively, to provide a "wrist" action, for a motor operated pair of gripper jaws, at the output of the third and last stepping motor. The stepping motors are multi-phase, employing serial or parallel connected energizing circuits.

The foregoing and other objects of the invention, features of novelty and advantages thereof will become more fully understood from the following detailed description of a preferred embodiment when considered in connection with the accompanying drawings in which:

FIG. 1 is a diagrammatic view of a four degree of freedom gripper in accordance with a preferred embodiment of the invention;

FIG. 2 is a diagrammatic sectional view of a gripper mechanism based on the arrangement shown in FIG. 1, but showing more details of the embodiment of the invention;

FIG. 3 is a diagrammatic plan view of the rotor and stator of one of the stepping motors as used in FIGS. 1 and 2;

FIG. 4 is a schematic wiring diagram of one of the stepping motors with the windings connected in series; and

FIG. 5 is a schematic wiring diagram of one of the stepping motors with the windings connected in parallel.

Similar reference characters refer to similar parts in each of the several views.

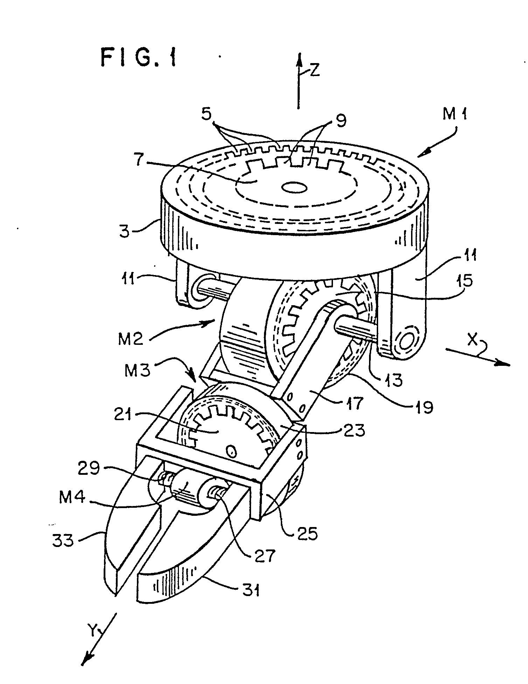

Referring now to FIGURE 1 of the drawings, there is shown a first stepping motor assembly, generally referred to by reference character M1, comprising an outer ring-like portion 3 having inwardly projecting teeth 5, and an inner portion 7 having plurality of outwardly projecting pole pieces 9. The inner portion 7 is adapted to be attached to a support not shown, such as the extremity of a robot arm. The outer portion 3 is free to rotate about the vertical axis indicated by the arrow Z, thus providing rotation in yaw. The legs 11 rigidly fastened to ring 3 support a shaft 13 to which the inner portion 15 of a second stepping motor M2 is attached, as is a bracket assembly 17. The outer ring 19 of motor M2 is solidly mounted to the outer ring portion 3 of motor M1. Thus rotor 15 and the bracket assembly 17 are free to rotate about the horizontal axis X, providing rotation in pitch for the bracket assembly.

The motor M3 has its inner or coil assembly 21 solidly mounted on the end piece of bracket assembly 17 thus allowing the outer ring 23 of motor M3 to rotate about the Y axis thereby providing rotation in roll for the jaw supporting bracket assembly 25.

Motor M4 may be of the brushless DC type, and has shafts 27 and 29 extending from both ends, the shafts being threaded and carrying thereon the jaws 31 and 33 which are arranged for sliding movement on the supporting bracket assembly 25. It will be apparent that as the motor is rotated in one direction or the other, the jaws will move from an open to a closed position, or vice versa, to thereby grasp and/or hold objects. It will be obvious that other types of grasping or holding devices, tools, and the like can be substituted for the jaws and the drive motor, depending on the job requirements.

One of the features of the present invention is the provision of modular structures which can be combined or used singly to provide assemblies which can accommodate job-specific applications. For example, the portion of the apparatus of FIGURE 1 including the stepping motor M1 can be used to provide incremental or continuous rotary motion to a tool or other device. The addition of the parts including the motor M2 will add another degree of freedom to the output, to provide an assembly with two degrees of freedom at the output. These arrangements are easily made, and because of the modularity, do not require expensive and time-consuming design changes.

To provide the necessary positional and velocity feedback signals to an associated control system, appropriate transducers can be provided to each of the motor assemblies. Optical, magnetic, capacitive, resistive and magneto-resistive transducers are well-known types of transducers which can be used. None are shown in FIGURE 1, since the actual form and placement are not germane to the invention.

The stepping motors are designed to be energized by three sources of power, having predetermined phase relationships with each other, and having a common return, as is well-known in the stepping motor art. Accordingly, each of these motors M1, M2, and M3 will require a four-conductor cable to the motor driver circuits. Since the inner windings for motor M1 will always be stationary with respect to the supporting arm, the connections may be made directly from the cable to the windings. Similarly, the cables to the stepping motors M1, M2, and M3 and the connections to motor M4 can be made directly, as long as the assemblies will not be rotated more than a full revolution, or a little more, in either direction. If continuous rotation is required, slip rings or rotary transformers would be used, as is known in the art.

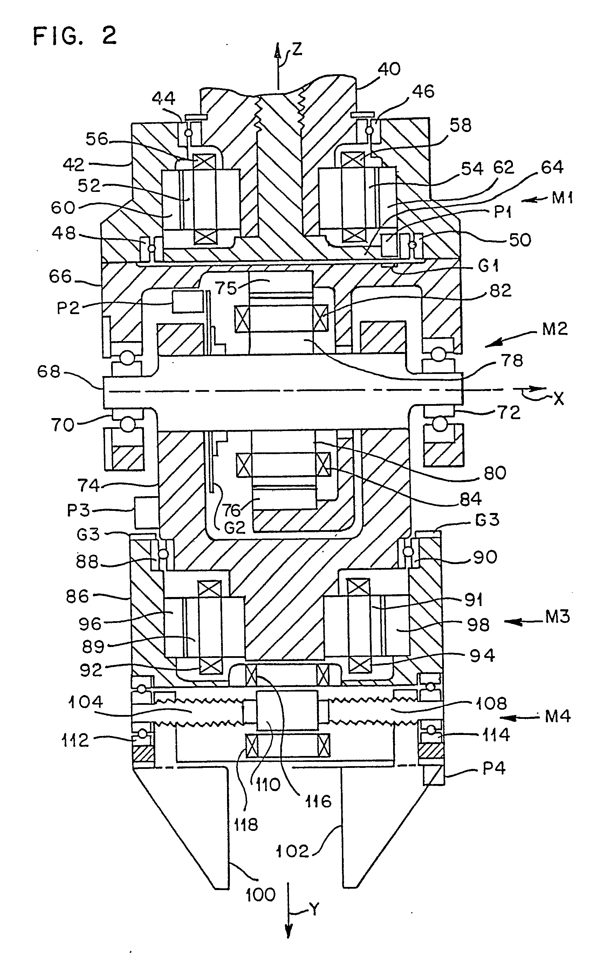

Referring now to FIGURE 2 of the drawings, there is shown a diagrammatic cross-sectional view of a gripper mechanism or robot "hand" with wrist action, being an elaboration of the showing of FIGURE 1. The support or arm 40 is aligned with the vertical or Z axis, and the motor assembly M1 provides rotation about that axis, or yaw motion. The rotating ring portion 42 is provided with suitable bearings 44, 46, 48, and 50 which retain the ring on the support arm and provide for the rotation. The pole laminations 52, 54 are magnetized by the windings 56, 58, which are wired in a manner to subsequently described, and cooperate with ring laminations 60, 62 to produce the torque needed to rotate the ring. A plate 64, rigidly attached to the bottom of the center post 40, carries a first sensor or transducer P1, which interacts with a ring-shaped grid G1 to provide position signals for feedback purposes to determine position, and/or velocity and/or acceleration information to the control system.

A lower element or plate 66 is rigidly attached to the upper ring element 42, and carries the parts comprising the motor assembly M2. This assembly provides rotation about the horizontal or X axis, thus providing motion in pitch. The bottom element 66 of the M1 assembly carries the shaft 68 in the bearing assemblies 70 and 72. A forked bracket 74 is rigidly fastened to the shaft to rotate therewith. Turning torque is provided by the motor assembly, including fixed or ring laminations 75, 76 which are rigidly supported by portions of the element 66, the pole laminations 78, 80 which are rigidly attached to shaft 68, and the windings 82, 84, carried by laminations 78, 80. When energized in a manner subsequently described, the resulting magnetic interactions will rotate shaft 68 and the parts attached thereto. Positional feedback signals are provided by the pickup or transducer P2, and its associated grid G2, in the form of a disc mounted for rotation on shaft 68. The net result is the rotation of the forked bracket 74 about the X axis, so that the motion of element 74 is in pitch.

The third and furthest removed motor assembly, which provides the motion in roll, about the Y axis, is designated generally as M3, and is supported by the outermost portion of the bracket or yoke 74. The ring or round shell 86 is supported from the bracket or yoke 74 by the ball bearing assembly 88, 90, so that it is free to rotate about the Y axis. It is driven by the stepping motor assembly including the pole laminations 89, 91 and energized windings 92, 94 reacting with laminations 96, 98 to produce the torque which rotates the shell 86 around the yoke 74. Feedback signals are provided by the sensor P3 and its grid G3, the latter being in the shape of a ring on the upper surface of the shell 86. Thus it is apparent that the M3 assembly provides the motion in roll for the entire combination.

The terminal work device, which can be a detachable element, such as a welding electrode, a paint spray nozzle, or the like, or a permanently mounted device, such as a gripping mechanism, as herein shown and described, is attached or forms a part of the rotatable element 86. As shown in FIGURE 2, gripper jaws 100, 102 are provided with opposing gripping faces and each has a threaded bore therethrough, so that the jaws are carried by the threaded shafts 104, 108, extending in opposite directions from the rotor 110 of a suitable motor, such as a brushless direct current motor. The outer ends of the shafts 104, 108 are supported by the bearings 112, 114. The shafts and traveling blocks are oppositely threaded, so that rotation of the rotor 110 in one direction will drive the jaws 100, 102 to their closed position, and rotation in the opposite direction will drive the jaws to their open position. Rotation of the rotor is obtained by energization of the coils 116, 118 and their associated laminations, using direct current of appropriate value and polarity. Feedback is provided by a suitable sensor P4.

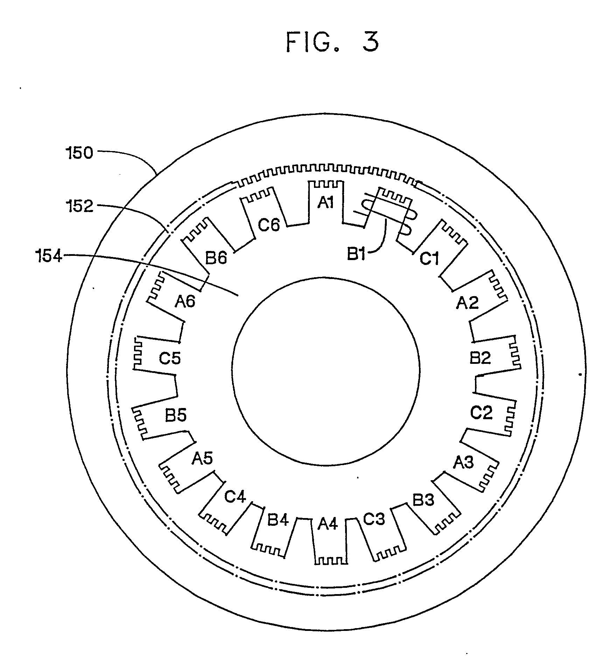

FIGURE 3 of the drawings illustrates the arrangement of the magnetic structure and energizing windings for the stepping motors used in the preferred embodiment of the invention as shown in FIGURES 1 and 2, and described previously. An outer ring 150 of laminated magnetic material is provided with a large plurality of inwardly projecting teeth or poles of relatively small size and spacing, only a few of which are shown to clarify the drawing, which extend around the entire interior circumference of the ring structure. An inner hub 154 of laminated magnetic material has a number of poles projecting outwardly therefrom. These poles are consecutively numbered by reference characters A1, B1, C1, A2, B2, C2, and so forth, to A6, B6, and C6, for a total of eighteen poles, divided into six sets of three poles each. Each of the poles is provided with a winding, such as the winding of pole B1. The windings on each of the remaining poles have not been shown, to simplify the drawing, but all of the windings have similar characteristics, such as number of turns, wire size, etc. and hence have similar electrical characteristics. The outer ring 150 and the inner hub 154 are supported and aligned by suitable bearings to permit relative rotation between the two elements, when suitable electrical power is supplied to the windings. The windings are energized by pulses timed to have predetermined phase relationships with one another, which cause the relative rotation of the parts in predetermined small angular steps, in the direction governed by the phase relations of the pulses. To provide for the small angular movements, the outer end of each of the poles is subdivided into a plurality of small teeth 152 as shown, which cooperate with the small teeth of the outer ring 150. Such construction and operation are well known in the field of stepping motors and need not be described in further detail.

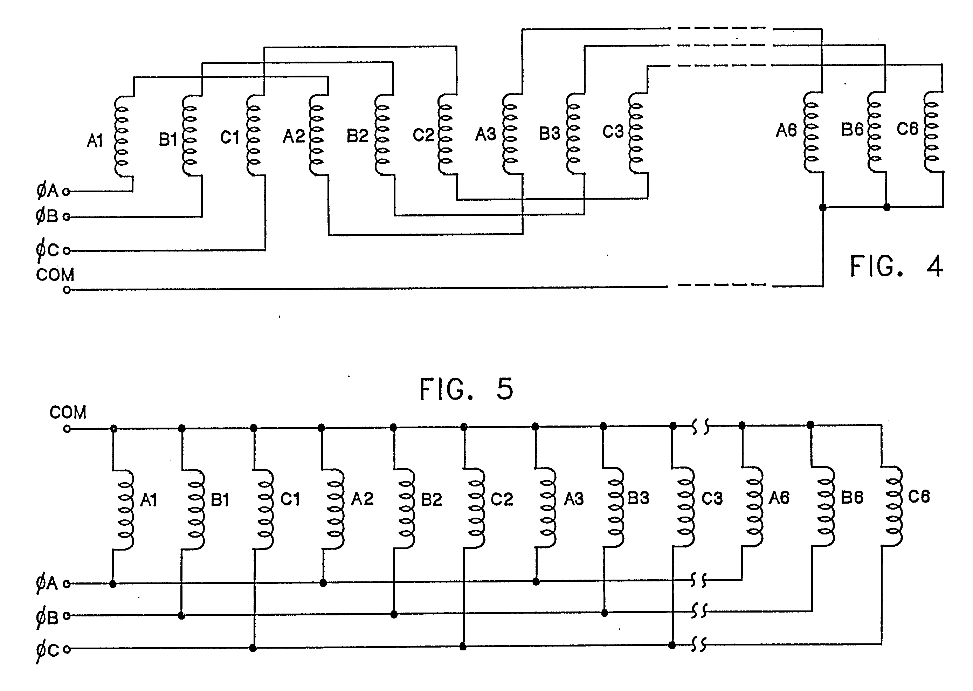

One method of connecting the windings for each of the stepping motors is a series connection arrangement as shown in FIGURE 4 of the drawings. The input lines comprise three lines extending from terminals ØA, ØB, and ØC, respectively, and a common return line COM. Each of the pole windings for a particular phase is connected in series with the other windings assigned to that phase. Thus the windings A1, A2, A3, and so on through winding A6 are connected in series between the terminal ØA and terminal COM. Windings B1 through B6 are connected between terminal ØB and terminal COM, and windings C1 through C6 are connected between terminal ØC and terminal COM.

An alternative method of connecting the windings is a parallel connection arrangement as shown in FIGURE 5 of the drawings. As in the series connection method described above, the terminals ØA, ØB and ØC, and the common terminal COM provide the necessary power connections. Each of the eighteen windings has one terminal thereof connected to the common terminal COM. The other terminal of all the six "A" windings is connected to the ØA terminal, the other terminals of the B phase windings are connected to the ØB terminal, and the other terminals of the C phase windings are connected to the ØC terminal.

Selection between the series connection arrangement and the parallel arrangement depends upon the type of performance required. The parallel arrangement provides lower inductance for the motors, but at the cost of higher current requirements.

In the disclosed embodiment, six three-phase motor structures are provided. However, any even number of the three-phase arrangements may be used, e.g., 2, 4, 12, etc. It is to be noted that each group of poles is displaced 1/3 tooth pitch from each other. The overall motor structure provides high torque, with small step angles and inherent detenting, which is a requisite for precise positioning in robotic devices.

In view of all of the foregoing, it is apparent that the invention provides a novel improved form of robot "hand" having the "wrist" action desirable in such devices. By use of stepping motors which provide high torque with minimum volume, such an assembly can be made to occupy much less space than previously known devices. Also by using such direct drives the ungainly and inaccurate systems using reduction gears, chains, concentric shafts, and similar mechanical transmissions are eliminated, together with their inherent disadvantages. The invention is distinguished by compactness, high mechanical stiffness, simple control, high torque and high angular resolution.

## Claims

1. A manipulator assembly comprising, in combination, a first, a second and a third self-contained direct drive stepping motor assembly (M1, M2, M3), each of said assemblies including a rotor element and a stator element,
said first assembly (M1) being mounted to a support (40) by its stator element and the rotor element (42) being mounted on said stator element for rotation about a first Z axis to provide rotary motion in yaw,
said second assembly (M2) being mounted on the rotor element (42) of said first assembly and having the stator element (66) of said second assembly mounted on the rotor element of said first assembly for rotation about a second X axis, said X axis being orthogonal to said Z axis, to provide rotary motion in pitch, and
said third assembly (M3) having its stator element (74) mounted on the rotor portion of said second element, the rotor element (86) of said third assembly being mounted for rotation about a third Y axis to provide rotary motion in roll.

2. A manipulator assembly as claimed in claim 1, further characterized by each of said stepping motors having multiple poles for either said stators or said rotors.

3. A manipulator assembly as claimed in claim 2, further characterized by each of said stepping motors having a plurality of operating windings divided into an even number of groups, and each of like windings in said groups being connected together and to a selected on of a plurality of phased electrical pulse sources, said plural electrical sources having a number of phases equal to the number of windings in a group.

4. A manipulator assembly as claimed in claim 3, further characterized by like operating windings being electrically connected in series.

5. A manipulator assembly as claimed in claim 3, further characterized by like operating windings being connected in parallel.

6. A manipulator assembly as claimed in one of the preceding claims, further characterized by including a work piece attached to the rotor element of said third assembly.

7. A manipulator assembly as claimed in claim 6, further characterized by said work piece comprising a gripper having motor operated gripping jaws.

8. A manipulator assembly as claimed in one of the preceding claims, further characterized by a plurality of position sensing elements, one for each of said first, said second and said third assemblies.

9. A manipulator sub-assembly including a high-resolution direct drive stepping motor having a rotor, a stator, and a plurality of operating windings for producing relative rotation of said rotor and said stator, mechanical input means connected to said rotor and mechanical output means connected to said stator.

10. A manipulator sub-assembly as claimed in claim 9, further characterized by said sub-assembly including a position sensing device for indicating the relative position of said rotor with respect to said stator.

FIG. 1

# FIG. 2

FIG. 3

EP 0 331 914 A2

FIG. 4

φA
φB
φC
COM

A1 B1 C1 A2 B2 C2 A3 B3 C3 A6 B6 C6

FIG. 5

COM

A1 B1 C1 A2 B2 C2 A3 B3 C3 A6 B6 C6

φA
φB
φC